# EUROPÄISCHE PATENTSCHRIFT

(11) **EP 3 729 611 B1**
(45) Veröffentlichungstag und Bekanntmachung des Hinweises auf die Patenterteilung: **01.11.2023**
(21) Anmeldenummer: 19725115.0
(22) Anmeldetag: 16.05.2019
(51) Int. Cl.: H02K 7/10, H02K 9/10, B65G 23/08

(54) **ROLLENMOTOR MIT GESCHLOSSENEM KÜHLKREISLAUF**
REEL MOTOR WITH CLOSED COOLING CIRCUIT
MOTEUR DE ROULEAU AVEC CIRCUIT FERMÉ DE REFROIDISSEMENT

(30) Priorität: 30.05.2018 DE 102018112912
(43) Veröffentlichungstag der Anmeldung: 28.10.2020
(73) Patentinhaber: EBM-PAPST ST. GEORGEN GMBH & CO. KG, 78112 St. Georgen (DE)
(72) Erfinder: SIEGER, Tobias, 78187 Geisingen (DE); FEHRENBACH, Johannes, 78089 Unterkirnach (DE); HORNBERGER, Jörg, 72280 Dornstetten-Aach (DE); FLAIG, Markus, 78739 Hardt (DE)
(74) Vertreter: Staeger & Sperling Partnerschaftsgesellschaft mbB
(86) Internationale Anmeldenummer: PCT/EP2019/062599
(87) Internationale Veröffentlichungsnummer: WO 2019/228819

(56) Entgegenhaltungen:
- WO-A1-2008/006934
- GB-A- 868 661

## Beschreibung

Die Erfindung betrifft einen Rollenmotor für eine angetriebene Förderrolle und eine Förderrolle mit einem derartigen Rollenmotor.

Aus dem Stand der Technik sind bereits verschiedene Ausführungsformen von angetriebenen Förderrollen bekannt. Diese werden bei Rollenfördersystemen eingesetzt, bei denen das Fördergut zumindest über einen Abschnitt eines Förderweges durch die angetriebenen Förderrollen bewegt wird. Die Förderrollen werden zumeist über einen Elektromotor angetrieben, der in der Förderrolle angeordnet ist, um einen kompakten und geschützten Aufbau zu ermöglichen.

Dabei ist jedoch die Wärmeentwicklung an dem Elektromotor und damit die Wärmeentwicklung in der Förderrolle problematisch. Bei kompakten Förderrollen ist die Antriebseinheit mit dem Elektromotor in dem Rollenkörper der Förderrolle angeordnet und diese dreht um die Antriebseinheit. Zwischen der Förderrolle und der Antriebseinheit ist daher ein Luftspalt vorhanden, der den thermischen Widerstand zwischen der Antriebseinheit und dem Rollenkörper erhöht. Je größer der Luftspalt desto größer der thermische Widerstand und desto schlechter die Wärmeabfuhr. Durch eine geringe Rollendrehzahl wird die Wärmeabfuhr zusätzlich verschlechtert, wodurch über verschiedene Fördergeschwindigkeiten hinweg keine einheitliche Wärmeabfuhr bzw. keine einheitliche Kühlung gewährleistet werden kann. Aufgrund einer schlechten Wärmeabfuhr bzw. einer nicht ausreichenden Kühlung steigt die Temperatur der Antriebseinheit, wodurch die Antriebsleistung sich verschlechtert und die Lebensdauer sowie der Wirkungsgrad sinken.

Die im Stand der Technik bekannten Lösungen sehen daher zum Teil vor, einen Innenraum der Förderrolle mit Öl zu füllen, um die Wärme vom Elektromotor über das Öl an einen Rollenkörper der Förderrolle und von dort in die Umgebung abzuführen. Problematisch ist hierbei, dass der jeweilige Innenraum öldicht sein muss, da ein Ölaustritt in jedem Fall zu vermeiden ist. Zudem werden die Widerstände gegen eine Bewegung der sich bewegenden Teile in der Förderrolle durch das Öl erhöht, was zu einem schlechteren Wirkungsgrad und einer verminderten Antriebsleistung führt.

Andere bekannte Lösungen sehen vor, zur verbesserten Wärmeableitung die Oberfläche des Motors oder des Rollenkörpers zu erhöhen. Dies führt jedoch dazu, dass die Abmaße der Förderrolle ansteigen und eine gegenüber anderen Lösungen vergrößerte Bauform hingenommen werden muss. Zu dem kann eine rein passive Kühlung nicht ausreichend sein, insbesondere da sich die Umgebungsbedingungen wie die Umgebungstemperatur oder die Umgebungsluftströmungen ändern können.

Durch eine Reduzierung des Abstandes zwischen dem Motor und dem Rollenkörper kann zwar ein geringerer Wärmewiderstand zwischen dem Motor und der Umgebung erreicht werden, jedoch werden auch die hierfür notwendige Fertigungsgenauigkeit und die Anfälligkeit gegen Beschädigungen erhöht. Werden die Maße bei der Herstellung nicht exakt eingehalten oder der Rollenkörper durch eine äußere Kraft in seiner Form minimal verändert, kann es dazu kommen, dass der rotierende Rollenkörper an einem Motorgehäuse schleift und damit eine zusätzliche Wärmeentwicklung und verminderte Antriebsleistung verursacht.

Wird der Rollenkörper offen gestaltet, so dass Umgebungsluft zur Kühlung direkt am Motor vorbei strömen kann, können Fremdstoffe und Schmutz in die Förderrolle eindringen. Durch die einhergehende Verschmutzung kommt es zu nachteiligen Effekten bezüglich der Wärmeentwicklung und des Verschleißes. Ferner kann die Förderrolle durch die Verschmutzungsanfälligkeit auch in bestimmten Umgebungen mit erhöhten Anforderungen an Verschleiß- und Verschmutzungsbeständigkeit nicht mehr zum Einsatz kommen.

Druckschriftlicher Stand der Technik im vorliegenden technischen Gebiet, welcher den Oberbegriff des Anspruchs 1 widerspiegelt, ist in den Dokumenten GB 868 661 A und WO 2008/006 934 A1 offenbart.

GB 868,661 A offenbart: Rollenmotor für eine angetriebene Förderrolle mit einem von einem Statorgehäuse umgebenen Stator und einem eine Rotorwelle antreibenden Rotor, ferner aufweisend ein das Statorgehäuse in Umfangsrichtung beabstandet umlaufendes rohrförmiges Außengehäuse, wobei zwischen dem Außengehäuse und dem Statorgehäuse ein Leerraum ausgebildet ist, der durch in dem Statorgehäuse ausgebildete Öffnungen mit einem den Stator aufnehmenden Innenraum des Statorgehäuses strömungsverbunden ist, wobei das Statorgehäuse entlang seiner axialen Längsrichtung zwei Außenabschnitte und einen axial dazwischen unmittelbar angrenzend liegenden Mittelabschnitt aufweist, wobei der Stator und der Rotor in dem Mittelabschnitt angeordnet sind und in den Außenabschnitten des Statorgehäuses jeweils die Öffnungen zu dem Leerraum zur Strömungsverbindung vorgesehen sind und ein an der Rotorwelle fixiertes Lüfterrad, das ausgebildet ist, einen Kühlluftstrom zu erzeugen, wobei durch den Innenraum des Statorgehäuses der Kühlluftstrom geführt ist, wobei die Rotorwelle in dem Statorgehäuse über ein Lagerschild und einem in dem Lagerschild aufgenommenen Lager gegenüber dem Statorgehäuse rotierbar gelagert ist und das Lagerschild Strömungsdurchgänge aufweist, die einen Teil des Strömungspfades bestimmen und wobei die Strömungsdurchgänge des Lagerschilds auf den Stator zuweisend ausgerichtet sind, wobei das Aussengehäuse mit der Rotorwelle verbunden ist und wobei ein Getriebe vorgesehen ist, wobei das Aussengehäuse über das Getriebe mit der Rotorwelle verbunden ist.

Der Erfindung liegt deshalb die Aufgabe zugrunde, vorbesagte Nachteile zu überwinden und eine robuste und beständige Förderrolle bereitzustellen, bei welcher die sich am Elektromotor entwickelnde Wärme effizient abgeführt wird. Diese Aufgabe wird durch die Merkmalskombination gemäß Patentanspruch 1 gelöst.

Erfindungsgemäß wird ein Rollenmotor für eine angetriebene Förderrolle vorgeschlagen. Der Rollenmotor hat einen von einem Statorgehäuse umgebenen Stator und einen eine Rotorwelle antreibenden Rotor. Ferner weist der Rollenmotor ein rohrförmiges Außengehäuse und ein Lüfterrad auf. Das Außengehäuse umläuft das Statorgehäuse in Umfangsrichtung beabstandet.

Zwischen dem Außengehäuse und dem Statorgehäuse ist dadurch ein Kühlkanal ausgebildet, der mit einem den Stator aufnehmenden Innenraum des Statorgehäuse strömungsverbunden ist. Das Lüfterrad ist an der Rotorwelle fixiert und ausgebildet, einen Kühlluftstrom zu erzeugen. Der Innenraum des Statorgehäuses und der Kühlkanal bestimmen einen geschlossenen Kühlkreislauf, durch welchen der Kühlluftstrom geführt ist.

Das Außengehäuse des Rollenmotors wird dabei entweder durch ein Gehäuseelement des Rollenmotors oder durch den Rollenkörper der Förderrolle gebildet. Der Rollenkörper ist das rotierende Teil, auf dem das zu fördernde Gut aufliegt und durch die Rotation bewegt wird. Der zwischen dem Statorgehäuse und dem Außengehäuse befindliche Kühlkanal bestimmt einen Luftspalt, der die Rotation des Außengehäuses bzw. des Rollenkörpers der Förderrolle gegenüber dem Statorgehäuse ermöglicht.

Durch den über das Lüfterrad erzeugten Kühlluftstrom wird Wärme von dem Stator des Rollenmotors abgeführt und in den Kühlkanal geleitet. Aus dem Kühlkanal wird die Wärme wiederum an das Außengehäuse und von dort in die Umgebung des Rollenmotors abgeleitet. Der in dem Statorgehäuse von dem Stator aufgewärmte Kühlluftstrom wird somit abgekühlt, bevor er wieder in das Statorgehäuse eintritt. Der Kühlluftstrom wird über das Statorgehäuse und das Außengehäuse geführt, ohne dass eine Verbindung zur Umgebung besteht, so dass ein geschlossener Kühlkreislauf hergestellt ist. Somit können weder Fremdkörper noch Schmutzpartikel in den Kühlkreislauf eindringen. Zugleich wird durch den geschlossenen Kühlkreislauf eine aktive Kühlung des Stators realisiert. Durch eine aktive Kühlung wird die Temperatur des Motors auch bei niedrigen Drehzahlen gering gehalten, womit die Leistungsabgabe des Motors auch bei niedrigen Drehzahlen durch die am Motor herrschende Temperatur nicht beeinflusst wird. Die Kühlung des Motors ist somit geschwindigkeitsunabhängiger.

Das Statorgehäuse, das Außengehäuse und mithin der zwischen ihnen angeordnete Kühlkanal sind vorzugsweise jeweils rohrförmig ausgebildet. Aufgrund des geschlossenen Kühlkreislaufs kann das Außengehäuse gegenüber der Umgebung gegen das Eindringen von Fremdkörpern und Flüssigkeiten abgedichtet werden. Durch die Abdichtung ist an dem Rollenmotor eine hohe Schutzart bzw. eine hohe IP-Schutzklasse erreichbar.

Der Motor ist in einer Ausführungsvariante als bürstenloser Gleichstrommotor (electronically commutated Motor, kurz EC-Motor) ausgebildet, dessen Rotor mit Permanentmagneten bestückt ist und der durch eine geeignete Schaltung so angesteuert wird, dass am Stator ein sich drehendes magnetisches Feld erzeugt wird, durch das der Rotor rotiert wird. Die für die Ansteuerung benötigte Schaltung bzw. Betriebselektronik ist dabei vorzugsweise unmittelbar in den Rollenmotor integriert. Die Motorelektronik mit der Schaltung bzw. der Betriebselektronik kann beispielsweise in einem Befestigungsabschnitt integriert sein, über welchen das Statorgehäuse bezüglich einem Rahmen der Fördervorrichtung fixiert wird.

Alternativ zu einem Innenläufer kann bei einer Verwendung eines bürstenlosen Gleichstrommotors auch ein Außenläufer verwendet werden. Dabei umgibt der Rotor den Stator und rotiert um diesen. Der Rotor ist bei einer solchen Ausführungsform vorzugsweise von einer Buchse umgeben, welche konzentrisch mit der Rotorwelle verbunden ist oder diese als rohrförmiges Hohlbauteil ausbildet.

Erfindungsgemäß ist vorgesehen, dass das Statorgehäuse entlang seiner axialen Längsrichtung zwei Außenabschnitte und unmittelbar an die Außenabschnitte angrenzend einen axial dazwischen liegenden Mittelabschnitt aufweist. Der Stator und der Rotor sind in dem Mittelabschnitt angeordnet. In den Außenabschnitten des Statorgehäuses sind jeweils Öffnungen zu dem Kühlkanal vorgesehen, welche eine Strömungsverbindung mit dem Kühlkanal herstellen. Der Kühlluftstrom tritt durch die Öffnungen aus dem Kühlkanal an einem Außenrandabschnitt in das Statorgehäuse ein, wird im Mittelabschnitt am Stator vorbei oder durch den Stator hindurch geführt und wird an dem jeweils anderen Außenrandabschnitt durch die Öffnungen aus dem Statorgehäuse in den Kühlkanal ausgeblasen.

Die Öffnungen erstrecken sich bei einer ebenfalls vorteilhaften Ausführungsvariante in Radialrichtung. Der Kühlluftstrom wird dadurch beim Austritt aus dem Statorgehäuse durch das Lüfterrad direkt gegen das Außengehäuse gefördert, wodurch die Wärme unmittelbar an das Außengehäuse abgegeben wird und beispielsweise nicht an Lager oder Dichtelemente, welche in Axialrichtung des Außengehäuses vor und nach dem Statorgehäuse angeordnet sind. Der Kühlluftstrom muss zudem bei einer radialen Ausblasrichtung von den Öffnungen in den Kühlkanal um nur 90° umgelenkt werden.

In axialen Außenrandabschnitten des Statorgehäuses ist vorzugsweise jeweils eine Vielzahl von radialen Öffnungen vorgesehen, die in Umfangsrichtung gleichmäßig zueinander beabstandet sind. Dabei können die Öffnungen in einem oder beiden axialen Außenrandabschnitten auch in mehreren voneinander in Axialrichtung beabstandeten Ebenen angeordnet sein.

Das Lüfterrad ist bei einer vorteilhaften Variante der Erfindung an der Rotorwelle in einem den Öffnungen zuweisenden Bereich vorgesehen. Dabei ist das Lüfterrad ausgebildet, Luft bzw. den Kühlluftstrom durch die Öffnungen aus dem Statorgehäuse in den Kühlkanal und aus dem Kühlkanal in das Statorgehäuse zu fördern. Die Luft wird durch das Lüfterrad in den Kühlkanal geblasen und gleichzeitig aus dem Kühlkanal in das Statorgehäuse gesaugt, so dass eine Umluftströmung innerhalb des geschlossenen Kühlkreislaufs entsteht.

Bei einer alternativen Ausführungsform ist jeweils ein Lüfterrad in jedem Außenrandabschnitt des Statorgehäuses vorgesehen. Beide Lüfterräder sind mit der Rotorwelle verbunden, wobei ein Lüfterrad Luft durch die jeweiligen Öffnungen in seinem Außenrandabschnitt aus dem Kühlkanal in das Statorgehäuse saugt und das andere Lüfterrad Luft durch die jeweiligen Öffnungen in seinem Außenrandabschnitt aus dem Statorgehäuse in den Kühlkanal bläst.

Um das Eindringen von Fremdluft bzw. Schmutz in den Rollenmotor und den Kühlkreislauf zu verhindern, ist das Außengehäuse bzw. der Rollenkörper der Förderrolle bei einer Ausgestaltungsvariante gegenüber der Umgebung durch mindestens ein Dichtelement abgedichtet. Das Dichtelement ist vorzugsweise an einem Randabschnitt in Axialrichtung des Außengehäuses angeordnet. Dabei können als Dichtelemente beispielsweise Wellendichtringe oder Labyrinthdichtungen zum Einsatz kommen.

Der Rollenmotor wird vorzugsweise an einem Rahmen einer Fördervorrichtung befestigt, um ein unkontrolliertes Drehen des Stators zu verhindern. Dafür sieht eine vorteilhafte Weiterbildung des Rollenmotors vor, dass das Statorgehäuse an einer Achse fixiert ist, die sich axial aus dem Außengehäuse heraus erstreckt. Diese Achse ist ferner zu der Rotorwelle konzentrisch angeordnet. Das Außengehäuse stützt sich vorzugsweise über eine Lagerung an der Achse ab und ist gegenüber der Achse rotierbar gelagert. Das Dichtelement kann beispielsweise ein zwischen dem Außengehäuse und der Achse angeordneter Wellendichtring sein, womit das Außengehäuse durch ein Lager um die Achse rotierbar und durch das Dichtelement zugleich abgedichtet ist. Die Achse kann an einem sich aus dem Außengehäuse heraus erstreckenden Abschnitt an der Fördervorrichtung drehfest befestigt werden, um den Stator gegenüber der Fördervorrichtung festzulegen.

Das Außengehäuse bzw. der Rollenkörper der Förderrolle wird durch den Rotor angetrieben, in dem der Rollenmotor ein Getriebe umfasst. Das Au-ßengehäuse ist erfindungsgemäß über das Getriebe mit der Rotorwelle verbunden. Vorzugsweise sind der Antriebsflansch und die Abtriebswelle des Getriebes konzentrisch zu der Rotorwelle und zu dem Außengehäuse angeordnet. Die Rotorwelle ist in einer Ausführung mit dem Antriebsflansch auf der Eingangsseite des Getriebes verbunden. Die Abtriebswelle ist wiederum über einen Flansch oder ein anderes Zwischenelement mit dem Außengehäuse verbunden. Als eine Getriebevariante wird ein Planetengetriebe verwendet.

Das Lüfterrad ist bei einer kompakt aufbauenden Ausführungsvariante in Axialrichtung gesehen zwischen dem Stator und dem Getriebe angeordnet.

Für eine zusätzliche, optionale Getriebekühlung können an dem Statorgehäuse zusätzliche Öffnungen vorgesehen sein, welche insbesondere in einem zu dem Getriebe benachbarten Abschnitt des Statorgehäuses ausgebildet sind. Durch eine Kühlung des Getriebes bzw. eine Wärmeabfuhr vom Getriebe kann der Wirkungsgrad des Getriebes erhöht und sein Verschleiß gesenkt werden.

In dem Statorgehäuse oder in dem Außengehäuse wird vorzugsweise zudem eine Motorelektronik zur Steuerung des Rollenmotors angeordnet. Insbesondere wird die Motorelektronik an einer mit der Achse verbundenen Seite des Statorgehäuses vorgesehen, wobei elektrische Leiter zur Stromversorgung der Motorelektronik und des Stators und/oder Rotors durch die Achse hindurch in das Außengehäuse bzw. in das Statorgehäuse geführt sind. Günstig ist hierbei, die Motorelektronik zumindest abschnittsweise im Bereich des geschlossenen Kühlkreislaufs, insbesondere in Strömungsrichtung an dem Stator gesehen vor dem Stator anzuordnen, so dass der über das Lüfterrad erzeugte Kühlluftstrom kühlend auf die Motorelektronik wirkt.

Eine weitere Ausführungsvariante des Rollenmotors sieht vor, dass der Stator Statorwicklungen umfasst, die innerhalb des Innenraums des Statorgehäuses angeordnet sind, so dass der Kühlluftstrom entlang der Statorwicklungen und/oder zwischen den Statorwicklungen hindurch verläuft. Dabei wird der Stator unmittelbar angeströmt und gekühlt. Die Oberfläche des Stators bzw. der Statorwicklungen wird direkt gekühlt, ohne dass beispielsweise zusätzliche Kühlrippen notwendig sind, welche die Wärme in dem Statorgehäuse von dem Stator auf den Kühlluftstrom übertragen.

Erfindungsgemäß ist die Rotorwelle in dem Statorgehäuse über ein Lagerschild und einem in dem Lagerschild aufgenommenen Lager gegenüber dem Statorgehäuse rotierbar gelagert. Das Lagerschild weist erfindungsgemäß Strömungsdurchgänge auf, die einen Teil des geschlossenen Kühlkreislaufs bestimmen. Somit wird auch der Lagerschild und mithin das Lager gekühlt. Durch eine Kühlung des Lagers kann seine Lebensdauer erhöht werden.

Zusätzlich werden in einer erfindungsgemäßen Ausgestaltung die Strömungsdurchgänge des Lagerschilds auf den Stator zuweisend ausgerichtet. Die Strömungsdurchgänge sind in einer erfindungsgemäßen Weiterbildung düsenförmig ausgebildet, wodurch der durch die Strömungsdurchgänge verlaufende Kühlluftstrom gezielt auf den Stator gerichtet und mithin die Kühlleistung vergrößert werden kann.

In weiteren Ausführungsvarianten weist das Außengehäuse bzw. der Rollenkörper der Förderrolle an seiner zu dem Statorgehäuse weisenden Innenwandseite oder das Statorgehäuse an seiner zum Außengehäuse weisenden Außenwandseite Kühlrippen auf. Bildet das Statorgehäuse die Kühlrippen aus, wirken diese den Stator kühlend und leiten die Wärme des Stators über das Statorgehäuse an den in dem Kühlkanal verlaufenden Kühlluftstrom weiter, welcher die Wärme an das Außengehäuse abgibt. Vorteilhaft sind alternativ an dem Außengehäuse bzw. der Rollenkörper der Förderrolle vorgesehene Kühlrippen. Der durch den Kühlkanal verlaufende Kühlluftstrom gibt seine Wärme an die Kühlrippen des Außengehäuses ab, wodurch das Au-ßengehäuse über die Kühlrippen aufgeheizt wird und die Wärme in die Umgebung abstrahlen kann. Die Kühlrippen können sich in Axialrichtung erstrecken oder schraubenförmig um die Rotationsachse des Außengehäuses ausgebildet sein. Durch die Erstreckung der Kühlrippen entlang der zu dem Statorgehäuse weisenden Außenwandseite des Außengehäuses kann eine zusätzliche Förderwirkung für den Kühlluftstrom bewirkt werden.

Eine weitere vorteilhafte Ausgestaltungsvariante sieht vor, dass das Außengehäuse bzw. der Rollenkörper der Förderrolle an seiner zu dem Statorgehäuse weisenden Innenwandseite oder das Statorgehäuse an seiner zum Außengehäuse weisenden Außenwandseite den Kühlluftstrom führende Leitelemente aufweist. Die Leitelemente können in einer Ausgestaltung eine im Längsschnitt entlang der Rotationsachse viertelkreisförmige Leitfläche ausbilden, welche den Kühlluftstrom von oder zu den Öffnungen in dem Statorgehäuse umlenkt. Hierzu wird in einer beispielhaften Ausführungsvariante ein Leitelement an der zu dem Statorgehäuse weisenden Außenwandseite des Außengehäuses bzw. der Rollenkörper der Förderrolle in einem dem Lüfterrad gegenüberliegenden Bereich vorgesehen. Wird der Kühlluftstrom von dem Lüfterrad aus dem Statorgehäuse gegen das Außengehäuse geblasen, wird der Kühlluftstrom entlang der im Schnitt viertelkreisförmigen Leitfläche des Leitelements entlang des Leitelements um 90° in den Kühlkanal umgelenkt. Im Bereich der Öffnungen des Statorgehäuses, die in den Innenraum des Statorgehäuses führen, ist in einer Ausgestaltung ebenfalls ein oder mehrere Leitelemente angeordnet, welche den Kühlluftstrom von dem Kühlkanal zurück in das Statorgehäuse lenken.

Als weiterer Aspekt der Erfindung wird zudem eine Förderrolle mit einem erfindungsgemäßen Rollenmotor vorgeschlagen. Die Förderrolle weist den zylindrischen Rollenkörper auf, wobei der Rollenkörper das Außengehäuse des Rollenmotors bildet. Alternativ kann der Rollenkörper rohrförmig ausgebildet sein und unmittelbar an dem Außengehäuse anliegen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figur näher dargestellt. Es zeigt:

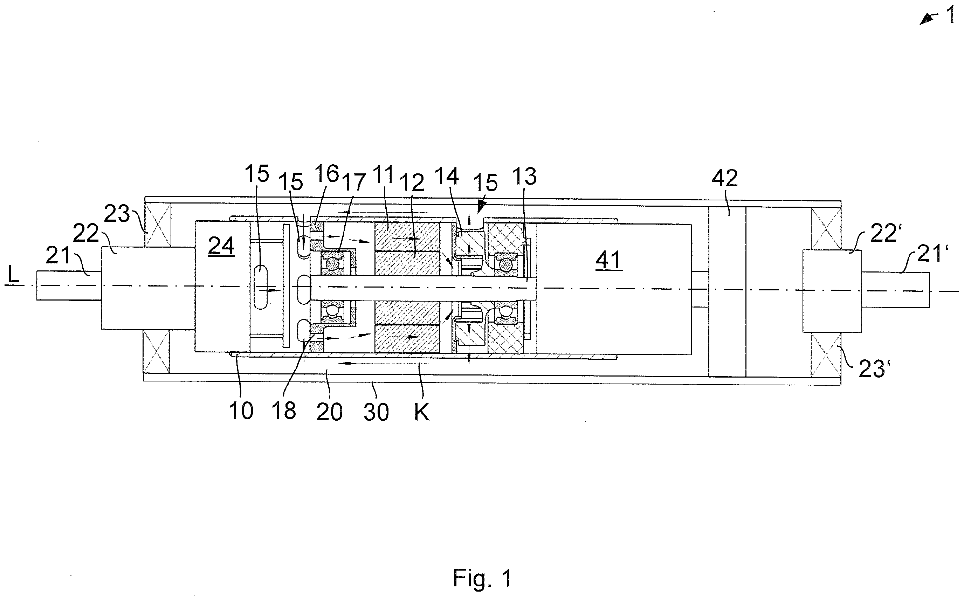

- Fig. 1: einen abgedichteten Rollenmotor mit einem geschlossenen Kühlkreislauf.

Das in Figur 1 gezeigte Ausführungsbeispiel des Rollenmotors 1 sieht vor, dass sich eine Achse 21 in das Außengehäuse 30 hinein erstreckt, wobei das Außengehäuse 30 im dargestellten Ausführungsbeispiel gleichzeitig den Rollenkörper der Förderrolle bildet. Die Achse 21 ist konzentrisch zu einer Längsachse L des Rollenmotors 1 ausgerichtet, welche zugleich eine Rotationsachse ist, um die das Außengehäuse 30 und die Rotorwelle 13 rotierbar gelagert sind. Die Achse 21 ist an ihrer aus dem Außengehäuse 30 heraus ragenden Seite an einem nicht dargestellten Rahmen einer Fördervorrichtung fixierbar, womit das in dem Innenraum des Außengehäuses 30 angeordnete und an der Achse 21 befestigte Statorgehäuse 10 gegenüber dem Rahmen der Fördervorrichtung ortsfest und insbesondere drehfest festgelegt ist.

An einem Lagerabschnitt 22 der Achse 21 bzw. um den Lagerabschnitt 22 ist eine erste Lagereinheit 23 zwischen dem Lagerabschnitt 22 und dem Au-ßengehäuse 30 angeordnet mit welcher das Außengehäuse 30 an der Achse 21 in Umfangsrichtung um die Längsachse L rotierbar gelagert ist. Die erste Lagereinheit 23 umfasst dabei sowohl ein Radiallager als auch ein Dichtelement, mit welchem der Rollenmotor 1 bzw. das Innere des Außengehäuses 30 gegen ein Eindringen von Fremdkörpern und Feuchtigkeit abgedichtet ist.

Auf einer der Lagereinheit 23 gegenüberliegenden Seite des Außengehäuses 30 ist konzentrisch zu der Längsachse L eine Stummelachse 21' vorgesehen, mit welcher die gegenüberliegende Seite des Außengehäuses 30 an dem Rahmen der Fördervorrichtung abstützbar ist. Die Stummelachse 21' weist ebenfalls einen Lagerabschnitt 22' auf, an welchem eine zweite Lagereinheit 23' mit einem Radiallager und einem Dichtelement angeordnet ist. Über die zwischen dem Außengehäuse 30 und dem Lagerabschnitt 22' der Stummelachse 21' angeordnete Lagereinheit 23' ist das Außengehäuse 30 auf der Seite der Stummelachse 21' an dieser abgestützt und um diese bzw. um die Längsache L drehbar gelagert.

Die erste Lagereinheit 23 oder die zweite Lagereinheit 23' kann ferner auch ein nicht gezeigtes Axiallager aufweisen.

In Axialrichtung entlang der Längsachse L schließt sich unmittelbar an den Lagerabschnitt 22 ein Befestigungsabschnitt 24 der Achse 21 an, an welchem das Statorgehäuse 10 mit einem seiner Außenabschnitte befestigt ist. In dem Außenabschnitt des Statorgehäuses 10 sind zudem Öffnungen 15 in zwei voneinander in Achsrichtung entlang der Längsachse L beabstandeten Ebenen ausgebildet. Den Außenabschnitt begrenzend ist in dem Statorgehäuse 10 ein Lagerschild 16 angeordnet. Die Rotorwelle 13 ist an dem Lagerschild 16 durch ein Lager 17 um die Längsachse L drehbar gelagert. Ferner sieht das Lagerschild 16 mehrere Strömungsdurchgänge 18 vor, welche den Außenabschnitt, an welchem das Statorgehäuse 10 an dem Befestigungsabschnitt 24 verbunden ist, strömungstechnisch mit dem Mittelabschnitt des Statorgehäuses 10 verbinden.

In dem Mittelabschnitt des Statorgehäuses 10 ist der Stator 11 angeordnet. Dabei wird der Stator 11 von dem Statorgehäuse 10 aufgenommen und ist an diesem befestigt. Der Stator 11 umläuft in Umfangsrichtung um die Längsachse L den Rotor 12 welcher an der Rotorwelle 13 fixiert ist.

An der Rotorwelle 13 ist an einer von dem Lagerschild 16 abgewandten Seite das Lüfterrad 14 befestigt, welches durch eine Rotation der Rotorwelle 13 angetrieben wird. Der Abschnitt des Statorgehäuses 10, welcher in Radialrichtung von der Längsachse L aus gesehen dem Lüfterrad 14 gegenüberliegt, bildet den zweiten Außenabschnitt des Statorgehäuses 10, in welchem ebenfalls Öffnungen 15 angeordnet sind.

In dem zweiten Außenabschnitt des Statorgehäuses 10 ist zudem ein Getriebe 41 in dem Statorgehäuse 10 angeordnet und mit diesem verbunden. Das Getriebe 41 ist eingangsseitig mit der Rotorwelle 13 verbunden und wird von dieser angetrieben. Ausgangseitig ist das Getriebe 41 bzw. eine Abtriebswelle des Getriebes 41 über ein Zwischenstück 42 mit dem Außengehäuse 30 verbunden. Durch eine Rotation des Rotors 12 bzw. der mit ihm verbunden Rotorwelle 13 sind somit zugleich das Lüfterrad 14 und über das Getriebe 41 sowie das Zwischenstück 42 das Außengehäuse 30 rotierbar.

Um eine reibungsfreie Rotation des Außengehäuses 30 um das Statorgehäuse 10 zu ermöglichen, sind diese in Radialrichtung voneinander beabstandet, wodurch ein Luftspalt zwischen den Gehäusen entsteht. Der Luftspalt bestimmt den Kühlkanal 20 welcher sich zumindest zwischen den Öffnungen 15 der Außenabschnitte des Statorgehäuses 10 und über den Mittelabschnitt des Statorgehäuses 10 erstreckt.

Bei dem dargestellten Ausführungsbeispiel ist das Lüfterrad 14 ein Radiallüfterrad, welches Luft aus dem Mittelabschnitt des Statorgehäuses 10 saugt und in Radialrichtung durch die Öffnungen 15 in den Kühlkanal 20 bläst. Da die Luft durch das Lüfterrad 14 aus dem Mittelabschnitt des Statorgehäuses 10 gesaugt wird und dieses im Mittelabschnitt in Radialrichtdung luftdicht ist, wird Luft aus dem Außenrandabschnitt des Statorgehäuses 10 auf der Seite des Befestigungsabschnitts 24 und durch die dort angeordneten Öffnungen 15 aus dem Kühlkanal 20 eingesaugt. In dem Kühlkanal 20 bildet sich somit eine Luftströmung von den an dem Lüfterrad 14 angeordneten Öffnungen 15 zu den davon entlang der Längsachse L beabstandeten Öffnungen 15 aus. Die Luftströmung in dem Kühlkreislauf bzw. der Kühlluftstrom K, der durch Pfeile entlang des Strömungsweges angedeutet ist, verläuft angetrieben durch das Lüfterrad 14 durch den Stator 11, nimmt dabei Wärme von dem Stator 11 auf und verläuft durch den Kühlkanal 20 an dem Außengehäuse 30 entlang. Die am Stator 11 aufgenommene Wärme wird an das Außengehäuse 30 abgegeben, sodass sich der am Stator 11 aufgeheizte Kühlluftstrom K über seinen Weg durch den Kühlkanal 20 wieder abkühlt, bevor er durch die Öffnungen 15 auf der Seite des Befestigungsabschnitts 24 wieder in das Statorgehäuse 10 eingesaugt wird. Das Außengehäuse 30 gibt die von dem Kühlluftstrom K übertragene Wärme an seine Umgebung ab, so dass ein geschlossener und gegenüber der Umgebung getrennter Kühlkreislauf entsteht.

In oder an dem Befestigungsabschnitt 24 kann zudem eine Motorelektronik aufgenommen sein, wobei der Kühlluftstrom K gezielt an der Motorelektronik vorbeigeführt werden kann um neben dem Stator zugleich auch diese zu kühlen.

## Patentansprüche

1. Rollenmotor (1) für eine angetriebene Förderrolle mit einem von einem Statorgehäuse (10) umgebenen Stator (11) und einem eine Rotorwelle (13) antreibenden Rotor (12), ferner aufweisend
ein das Statorgehäuse (10) in Umfangsrichtung beabstandet umlaufendes rohrförmiges Außengehäuse (30), wobei zwischen dem Außengehäuse (30) und dem Statorgehäuse (10) ein Kühlkanal (20) ausgebildet ist, der durch in dem Statorgehäuse (10) ausgebildete Öffnungen (15) mit einem den Stator (11) aufnehmenden Innenraum des Statorgehäuses (10) strömungsverbunden ist, wobei das Statorgehäuse (10) entlang seiner axialen Längsrichtung zwei Außenabschnitte und einen axial dazwischen unmittelbar angrenzend liegenden Mittelabschnitt aufweist, wobei der Stator (11) und der Rotor (12) in dem Mittelabschnitt angeordnet sind und in den Außenabschnitten des Statorgehäuses jeweils die Öffnungen (15) zu dem Kühlkanal (20) zur Strömungsverbindung vorgesehen sind und
ein an der Rotorwelle (13) fixiertes Lüfterrad (14), das ausgebildet ist, einen Kühlluftstrom (K) zu erzeugen, wobei der Innenraum des Statorgehäuses (10) und der Kühlkanal (20) einen geschlossenen Kühlkreislauf bestimmen, durch welchen der Kühlluftstrom geführt ist,
wobei die Rotorwelle (13) in dem Statorgehäuse (10) über ein Lagerschild (16) und einem in dem Lagerschild (16) aufgenommenen Lager (17) gegenüber dem Statorgehäuse (10) rotierbar gelagert ist und das Lagerschild (16) Strömungsdurchgänge (18) aufweist, die einen Teil des geschlossenen Kühlkreislaufs bestimmen und
wobei die Strömungsdurchgänge (18) des Lagerschilds (16) auf den Stator (11) zuweisend ausgerichtet und/oder düsenförmig ausgebildet sind, wobei das Außengehäuse (30) mit der Rotorwelle (13) verbunden ist und wobei ein Getriebe (41) vorgesehen ist, wobei das Außengehäuse (30) über das Getriebe (41) mit der Rotorwelle (13) verbunden ist.

2. Rollenmotor nach dem vorhergehenden Anspruch, wobei
sich die Öffnungen (15) in Radialrichtung erstrecken.

3. Rollenmotor nach einem der vorhergehenden Ansprüche 1 oder 2, wobei
das Lüfterrad (14) an der Rotorwelle (13) in einem den Öffnungen (15) zuweisenden Bereich vorgesehen und ausgebildet ist, Luft durch die Öffnungen (15) aus dem Statorgehäuse (10) in den Kühlkanal (20) oder aus dem Kühlkanal (20) in das Statorgehäuse (10) zu fördern.

4. Rollenmotor nach einem der vorhergehenden Ansprüche, wobei
das Außengehäuse (30) gegenüber der Umgebung durch mindestens ein Dichtelement abgedichtet ist.

5. Rollenmotor nach einem der vorhergehenden Ansprüche, wobei
das Statorgehäuse (10) an einer sich axial aus dem Außengehäuse (30) heraus erstreckenden und zu der Rotorwelle (13) konzentrisch angeordneten Achse (21) fixiert ist und das Außengehäuse (30) gegenüber der Achse (21) rotierbar gelagert ist.

6. Rollenmotor nach dem vorhergehenden Anspruch, wobei
das Lüfterrad (14) in Axialrichtung gesehen zwischen dem Stator (11) und dem Getriebe (41) angeordnet ist.

7. Rollenmotor nach einem der vorhergehenden Ansprüche, wobei
der Stator (11) Statorwicklungen umfasst, die innerhalb des Innenraums des Statorgehäuses (10) angeordnet sind, so dass der Kühlluftstrom (K) entlang der Statorwicklungen und/oder zwischen den Statorwicklungen hindurch verläuft.

8. Rollenmotor nach einem der vorhergehenden Ansprüche, wobei
das Außengehäuse (30) an seiner zu dem Statorgehäuse (10) weisenden Innenwandseite oder das Statorgehäuse (10) an seiner zum Außengehäuse (30) weisenden Außenwandseite Kühlrippen aufweist.

9. Rollenmotor nach einem der vorhergehenden Ansprüche, wobei
das Außengehäuse (30) an seiner zu dem Statorgehäuse (10) weisenden Innenwandseite oder das Statorgehäuse (10) an seiner zum Außengehäuse (30) weisenden Außenwandseite den Kühlluftstrom (K) führende Leitelemente aufweist.

10. Förderrolle mit einem Rollenmotor (1) nach einem der vorhergehenden Ansprüche, mit einem zylindrischen Rollenkörper, wobei der Rollenkörper durch das Außengehäuse (30) des Rollenmotors (1) gebildet ist.

## Claims

1. A reel motor (1) for a driven conveyor roller with a stator (11) surrounded by a stator housing (10) and a rotor (12) driving a rotor shaft (13), further having a tubular outer housing (30) surrounding the stator housing (10) spaced apart in the circumferential direction, wherein a cooling channel (20), which is fluidly connected to a stator-receiving interior space of the stator housing (10) through openings (15) formed in the stator housing (10), is formed between the outer housing (30) and the stator housing (10), wherein the stator housing (10) has two outer portions and a central portion, which is axially in between and directly adjacent, along its axial longitudinal direction, wherein the stator (11) and the rotor (12) are arranged in the central portion and in the outer portions of the stator housing, the respective openings (15) to the cooling channel (20) are provided for flow connection, and a fan wheel (14) fixed to the rotor shaft (13), which is formed to create a cooling air flow (K), wherein the interior space of the stator housing (10) and the cooling channel (20) determine a closed cooling circuit through which the cooling air flow is guided,
wherein the rotor shaft (13) is rotatably mounted in the stator housing (10) via a bearing shield (16) and a bearing (17) received in the bearing shield (16 relative to the stator housing (10) and the bearing shield (16) has flow passages (18) which determine a part of the closed cooling circuit, and
wherein the flow passages (18) of the bearing shield (16) are oriented facing the stator (11) and/or formed nozzle-shaped, wherein the outer housing (30) is connected to the rotor shaft (13) and wherein a gear (41) is provided, wherein the outer housing (30) is connected to the rotor shaft (13) via the gear (41).

2. The reel motor according to the preceding claim, wherein the openings (15) extend in the radial direction.

3. The reel motor according to any one of the preceding claims 1 or 2, wherein the fan wheel (14) is provided on the rotor shaft (13) in a region facing the openings (15) and formed to convey air through the openings (15) from the stator housing (10) into the cooling channel (20) or out of the cooling channel (20) into the stator housino (10).

4. The reel motor according to any one of the preceding claims, wherein the outer housing (30) is sealed against the environment through at least one sealing element.

5. The reel motor according to any one of the preceding claims, wherein the stator housing (10) is fixed to an axis (21) which extends axially out of the outer housing (30) and is arranged concentrically to the rotor shaft (13) and the outer housing (30) is rotatably mounted relative to the axis (21).

6. The reel motor according to the preceding claim, wherein the fan wheel (14) is arranged between the stator (11) and the gear (41) as seen in the axial direction.

7. The reel motor according to any one of the preceding claims, wherein the stator (11) comprises stator windings which are arranged within the interior space of the stator housing (10), such that the cooling air flow (K) passes along the stator windings and/or between the stator windings.

8. The reel motor according to any one of the preceding claims, wherein the outer housing (30), on its interior wall side facing the stator housing (10), or the stator housing (10), on its exterior wall side facing the outer housing (30), has cooling ribs.

9. The reel motor according to any one of the preceding claims, wherein the outer housing (30), on its interior wall side facing the stator housing (10), or the stator housing (10), on its exterior wall side facing the outer housing (30), has directing elements guiding the cooling air flow (K).

10. A conveyor roller with a reel motor (1) according to any one of the preceding claims, with a cylindrical roller body, wherein the roller body is formed by the outer housing (30) of the reel motor (1).

## Revendications

1. Moteur de rouleau (1) pour un rouleau de convoyeur entraîné avec un stator (11) entouré par un carter de stator (10) et un rotor (12) entraînant un arbre de rotor (13), comprenant en outre un carter externe tubulaire (30) s'étendant autour du carter de stator (10) à distance dans la direction circonférentielle, dans lequel un canal de refroidissement (20) est formé entre le carter externe (30) et le carter de stator (10) et est en communication fluidique avec un intérieur du carter de stator (10) logeant le stator (11) à travers des ouvertures (15) formées dans le carter de stator (10), dans lequel le carter de stator (10) comprend, le long de sa direction longitudinale axiale, deux sections externes et une section médiane situées directement adjacentes axialement entre elles, dans lequel le stator (11) et le rotor (12) sont agencés dans la section médiane et chaque ouverture (15) vers le canal de refroidissement (20) est prévue pour la communication fluidique dans les sections externes du carter de stator et une roue de ventilateur (14) fixée à l'arbre de rotor (13) qui est conçue pour fournir un écoulement d'air de refroidissement (K) à générer, dans lequel l'intérieur du carter de stator (10) et le canal de refroidissement (20) définissent un circuit fermé de refroidissement à travers lequel le flux d'air de refroidissement est dirigé,
dans lequel l'arbre de rotor (13) est monté de manière rotative dans le carter de stator (10) via un flasque (16) et un palier (17) logé dans le flasque (16) par rapport au carter de stator (10), et le flasque (16) comprend des passages d'écoulement (18), qui définissent une partie du circuit fermé de refroidissement et
dans lequel les passages d'écoulement (18) du flasque (16) sont alignés pour faire face au stator (11) et/ou sont en forme de buse, dans lequel le carter externe (30) est relié à l'arbre de rotor (13) et dans lequel un engrenage (41) est prévu, dans lequel le carter externe (30) est relié à l'arbre de rotor (13) via l'engrenage (41).

2. Moteur de rouleau selon la revendication précédente, dans lequel les ouvertures (15) s'étendent dans une direction radiale.

3. Moteur de rouleau selon l'une des revendications précédentes 1 ou 2, dans lequel la roue de ventilateur (14) est prévue sur l'arbre de rotor (13) dans une zone faisant face aux ouvertures (15) et est conçue pour laisser passer l'air à travers les ouvertures (15) hors du carter de stator (10) dans le canal de refroidissement (20) ou hors du canal de refroidissement (20) dans le carter de stator (10).

4. Moteur de rouleau selon l'une des revendications précédentes, dans lequel le carter externe (30) est isolé de l'environnement par au moins un élément d'étanchéité.

5. Moteur de rouleau selon l'une des revendications précédentes, dans lequel le carter de stator (10) est fixé à un axe (21) s'étendant axialement hors du carter externe (30) et agencé concentriquement à l'arbre de rotor (13) et le carter externe (30) est monté de manière rotative par rapport à l'axe (21).

6. Moteur de rouleau selon la revendication précédente, dans lequel la roue de ventilateur (14), vue dans la direction axiale, est disposée entre le stator (11) et l'engrenage (41).

7. Moteur de rouleau selon l'une des revendications précédentes, dans lequel le stator (11) comporte des enroulements de stator qui sont disposés à l'intérieur du carter de stator (10) de sorte que l'écoulement d'air de refroidissement (K) s'étend le long des enroulements de stator et/ou entre les enroulements de stator.

8. Moteur de rouleau selon l'une des revendications précédentes, dans lequel le carter externe (30) comprend des nervures de refroidissement sur son côté de paroi interne tourné vers le carter de stator (10) ou le carter de stator (10) sur son côté de paroi externe tourné vers le carter externe (30).

9. Moteur de rouleau selon l'une des revendications précédentes, dans lequel le carter externe (30) comprend des éléments conducteurs guidant l'écoulement d'air de refroidissement (K) sur son côté de paroi interne tourné vers le carter de stator (10) ou le carter de stator (10) sur son côté de paroi externe tourné vers le carter externe (30).

10. Rouleau de convoyeur avec un moteur de rouleau (1) selon l'une des revendications précédentes, avec un corps de rouleau cylindrique, dans lequel le corps de rouleau est formé par le carter externe (30) du moteur de rouleau (1).
